# EUROPÄISCHE PATENTSCHRIFT

(11) **EP 3 283 690 B1**
(45) Veröffentlichungstag und Bekanntmachung des Hinweises auf die Patenterteilung: **08.05.2019**
(21) Anmeldenummer: 16709907.6
(22) Anmeldetag: 15.03.2016
(51) Int. Cl.: E01B 27/00, B61D 15/00, B61D 47/00

(54) **SPEICHERWAGEN FÜR SCHÜTTGUT**
STORAGE CART FOR BULK MATERIAL
WAGON DE STOCKAGE POUR PRODUIT EN VRAC

(30) Priorität: 13.04.2015 AT 2152015
(43) Veröffentlichungstag der Anmeldung: 21.02.2018
(73) Patentinhaber: Plasser & Theurer Export von Bahnbaumaschinen Gesellschaft m.b.H., 1010 Wien (AT)
(72) Erfinder: BRUNNINGER, Manfred, 4203 Altenberg (AT)
(86) Internationale Anmeldenummer: PCT/EP2016/000456
(87) Internationale Veröffentlichungsnummer: WO 2016/165805

(56) Entgegenhaltungen:
- EP-A1- 2 155 966
- EP-A2- 1 184 248

## Beschreibung

Die Erfindung betrifft einen Speicherwagen für Schüttgut, mit einem auf Schienenfahrwerken verfahrbaren, ein in Wagenlängsrichtung verlaufendes Bodenförderband aufweisenden Ladecontainer und mit einem an ein Übergabeende des Bodenförderbandes anschließenden, über ein vorderes Wagenende vorkragenden Übergabeförderband zur Weitergabe von gespeichertem Schüttgut in einer Förderrichtung, und mit einem - an einem oberen Ende des Ladecontainers angeordneten - in Wagenlängsrichtung verlaufenden Zusatz-Förderband.

Ein derartig ausgebildeter Speicherwagen ist beispielsweise durch EP 2 155 966 bereits bekannt. Das in Wagenlängsrichtung verschiebbare Zusatz-Förderband kann dazu verwendet werden, um beispielsweise durch eine Baggerschaufel abgeworfenes Schüttgut in den Ladecontainer zu

EP 1 184 248 A2 beschreibt einen ähnlichen Speicherwagen mit schwenkbarer Umlenkplatte.

Die Aufgabe der vorliegenden Erfindung liegt nun in der Schaffung eines Speicherwagens der eingangs genannten Art, mit dem eine Zwischenspeicherung von Schüttgut möglich ist.

Diese Aufgabe wird erfindungsgemäß mit einem Speicherwagen der gattungsgemäßen Art durch die im Kennzeichen des Hauptanspruches angeführten Merkmale gelöst.

Mit dieser Ausbildung ist es nunmehr möglich, bedarfsweise Schüttgut vom Zusatz-Förderband über die Umlenkplatte auf das Bodenförderband abzuwerfen, wobei dieses in einer langsamen Speichergeschwindigkeit entgegen der Förderrichtung bewegt wird. Diese provisorische Zwischenspeicherung ermöglicht nun den unmittelbar anschließenden Speicherwagen für dessen Entleerung abzukuppeln, ohne dass damit der im Rahmen eines kontinuierlichen Arbeitsvorganges, beispielsweise einer Schotterreinigung, kontinuierliche Anfall von zu speicherndem Schüttgut gestoppt werden muss.

Außerdem kann die Umlenkplatte auch dazu verwendet werden, im Falle einer alternativen Durchförderung des Schüttgutes vom Boden- auf das anschließende Übergabeförderband durch eine Spaltbildung zwischen Umlenkplatte und Bodenförderband die Schüttguthöhe genau zu begrenzen. Damit können durch unregelmäßige Materialeinbringung verursachte Höhendifferenzen ausgeglichen werden, wodurch der Speichervorgang für die nachfolgenden Speicherwagen verbesserbar ist.

Weitere Vorteile der Erfindung ergeben sich aus den Unteransprüchen und der Zeichnungsbeschreibung.

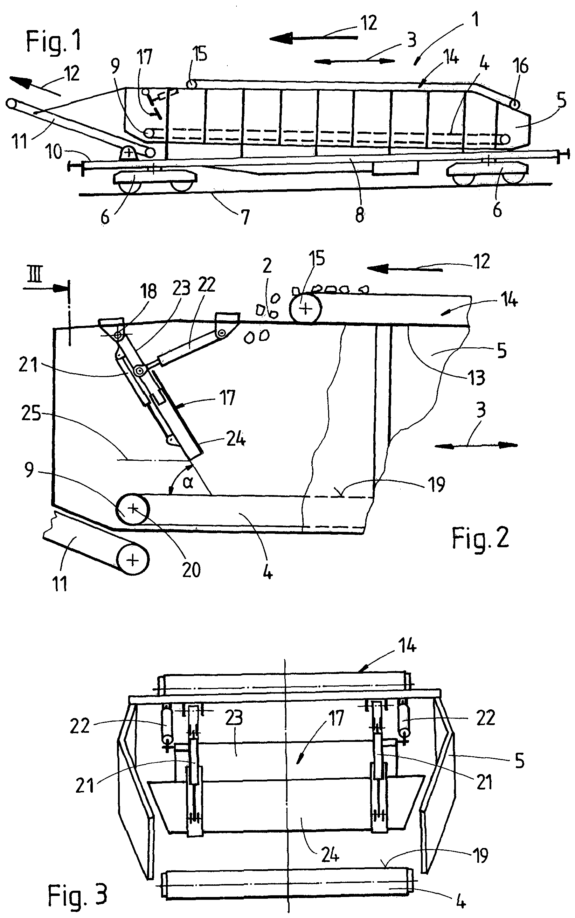

Im Folgenden wird die Erfindung anhand eines in der Zeichnung dargestellten Ausführungsbeispieles näher beschrieben. Es zeigen: Fig. 1 eine Seitenansicht eines Speicherwagens, Fig. 2 eine vergrößerte Seitenansicht eines eine Umlenkplatte aufweisenden Wagenendes, und Fig. 3 einen Querschnitt durch den Speicherwagen gemäß der Schnittlinie III in Fig. 2.

Ein in Fig. 1 ersichtlicher Speicherwagen 1 ist zur Speicherung von Schüttgut 2 mit einem in Wagenlängsrichtung 3 verlaufenden Bodenförderband 4 ausgestattet, das in einem Ladecontainer 5 anstelle einer Bodenfläche angeordnet ist. Der Ladcontainer 5 ist auf einem durch Schienenfahrwerke 6 auf einem Gleis 7 verfahrbaren Wagenrahmen 8 befestigt.

An ein Übergabeende 9 des Bodenförderbandes 4 anschließend ist ein - über ein vorderes Wagenende 10 vorkragendes - Übergabeförderband 11 vorgesehen. Durch dieses kann das Schüttgut 2 wahlweise in einer Förderrichtung 12 auf einen vorgeordneten weiteren (nicht dargestellten) Speicherwagen 1 transportiert werden.

Wie insbesondere in Fig. 2 und 3 ersichtlich, ist an einem oberen Ende 13 des Ladecontainers 5 ein in der Wagenlängsrichtung 3 verlaufendes Zusatz-Förderband 14 angeordnet. Dieses weist ein - bezüglich der Förderrichtung 12 - vorderes Abwurfende 15 und hinteres Aufnahmeende 16 auf.

Oberhalb des Übergabeendes 9 des Bodenförderbandes 4 und unterhalb des Abwurfendes 15 des Zusatz-Förderbandes 14 ist eine senkrecht zur Wagenlängsrichtung 3 verlaufende Umlenkplatte 17 angeordnet. Diese ist um eine Schwenkachse 18 relativ zum Ladecontainer 5 - für eine Änderung eines mit einer Förderebene 19 des Bodenförderbandes 4 eingeschlossenen Umlenkwinkels α - schwenkbar ausgebildet.

Die im Bereich des oberen Endes 13 des Ladecontainers 5 positionierte Schwenkachse 18 ist parallel zu einer Umlenkachse 20 des Bodenförderbandes 4 angeordnet. Die Umlenkplatte 17 setzt sich aus einem - bezüglich einer Vertikalen - oberen und einem durch einen Antrieb 21 relativ zu diesem höhenverstellbaren unteren Plattenabschnitt 23, 24 zusammen. Die Verschwenkung der Umlenkplatte 17 um die Schwenkachse 18 erfolgt durch Schwenkantriebe 22.

Im Folgenden werden die Einsatzmöglichkeiten des erfindungsgemäß ausgebildeten Speicherwagens 1 näher beschrieben. Die Beschickung des Speicherwagens 1 erfolgt beispielsweise durch eine nicht näher dargestellte Reinigungsmaschine, durch die das Schüttgut 2, z. B. als Abraum, auf das hintere Aufnahmeende 16 des Zusatz-Förderbandes 14 abgeworfen wird.

Im Bereich des vorderen Abwurfendes 15 wird das Schüttgut 2 auf das vordere Ende des Bodenförderbandes 4 abgeworfen, das einen Weitertransport auf das Übergabeförderband 11 durchführt. Dabei kann wahlweise durch entsprechende Einstellung der Umlenkplatte 17 die Höhe der Schüttgutlage (s. Linie 25 in Fig. 2) festgelegt werden. Damit kommt es - trotz unterschiedlich anfallender Abraummengen - zu einer vorteilhaften gleichmäßigen Weitergabe von Schüttgut 2 auf nicht näher dargestellte vorgeordnete Speicherwagen 1, die in bekannter Weise zu einem Zugverband zusammengekuppelt sind.

Sobald die vorgeordneten Speicherwagen 1 befüllt sind, werden diese vom dargestellten Speicherwagen 1 abgekuppelt und zur Entleerung abtransportiert. Um für diesen Fall einen Stopp des Arbeitsprozesses (z. B. Schotterreinigung) zu vermeiden, kann der Betrieb des Speicherwagens 1 in vorteilhafter Weise auf Speicherfunktion umgestellt werden. Dies erfolgt dadurch, dass das von der Umlenkplatte 17 umgeleitete Schüttgut 2 durch eine Umkehr der Förderrichtung 12 des Bodenförderbandes 4 (entgegengesetzt zur durch den Pfeil 12 dargestellten ersten Förderrichtung) in Richtung zum hinteren Aufnahmeende gefördert und zur vollständigen Befüllung des Ladecontainers 5 gespeichert wird. Sobald die geleerten Speicherwagen 1 wieder angekuppelt sind, erfolgt eine Umstellung auf Förderbetrieb, wie er zuvor bereits beschrieben wurde.

## Patentansprüche

1. Speicherwagen (1) für Schüttgut (2), mit einem auf Schienenfahrwerken (6) verfahrbaren, ein in Wagenlängsrichtung verlaufendes Bodenförderband (4) aufweisenden Ladecontainer (5) und mit einem an ein Übergabeende (9) des Bodenförderbandes (4) anschließenden, über ein vorderes Wagenende vorkragenden Übergabeförderband (11) zur Weitergabe des gespeicherten Schüttgutes (2) in einer Förderrichtung (12), und mit einem - an einem oberen Ende (13) des Ladecontainers (5) angeordneten - in Wagenlängsrichtung verlaufenden Zusatz-Förderband (14), **gekennzeichnet durch** folgende Merkmale:
a) oberhalb des Übergabeendes (9) des Bodenförderbandes (4) und unterhalb eines Abwurfendes (15) des Zusatz-Förderbandes (14) ist eine senkrecht zur Wagenlängsrichtung (3) verlaufende Umlenkplatte (17) angeordnet,
b) die Umlenkplatte (17) ist um eine Schwenkachse (18) relativ zum Ladecontainer (5) - für eine Änderung eines mit einer Förderebene (19) des Bodenförderbandes (4) eingeschlossenen Umlenkwinkels α - schwenkbar ausgebildet,
c) das Bodenförderband (4) ist für eine Umkehrung der Förderrichtung 12 ausgebildet.

2. Speicherwagen nach Anspruch 1, **dadurch gekennzeichnet, dass** die Schwenkachse (18) parallel zu einer Umlenkachse (20) des Bodenförderbandes (4) angeordnet ist.

3. Speicherwagen nach Anspruch 2, **dadurch gekennzeichnet, dass** die Schwenkachse (18) im Bereich des oberen Endes (13) des Ladecontainers (5) angeordnet ist.

4. Speicherwagen nach Anspruch 1, **dadurch gekennzeichnet, dass** die Umlenkplatte (17) aus einem - bezüglich einer Vertikalen - oberen und einem durch einen Antrieb (21) relativ zu diesem höhenverstellbaren unteren Plattenabschnitt (23, 24) zusammengesetzt ist.

## Claims

1. A storage wagon (1) for bulk material (2), including a loading container (5) which is mobile on on-track undercarriages (6) and has a bottom conveyor belt (4) extending the longitudinal direction of the wagon, and a transfer conveyor belt (11) for passing on the stored bulk material (2) in a conveying direction (12), the transfer conveyor belt (11) adjoining a transfer end (9) of the bottom conveyor belt (4) and projecting beyond a front end (13) of the wagon, and also including an auxiliary conveyor belt (14) arranged at an upper end (13) of the loading container (5) and extending in the longitudinal direction of the wagon, **characterized by the following features:**
a) arranged above the transfer end (9) of the bottom conveyor belt (4) and underneath a discharge end (15) of the auxiliary conveyor belt (14) is a deflector plate (17) extending perpendicularly to the longitudinal direction (3) of the wagon,
b) the deflector plate (17) is designed to be pivotable about a pivot axis (18) relative to the loading container (5) for changing a deflection angle α enclosed with a conveying plane (19) of the bottom conveyor belt (4),
c) the bottom conveyor belt (4) is designed for reversal of the conveying direction 12.

2. A storage wagon according to claim 1, **characterized in that** the pivot axis (18) is arranged parallel to a deflection axis (20) of the bottom conveyor belt (4).

3. A storage wagon according to claim 2, **characterized in that** the pivot axis (18) is arranged in the region of the upper end (13) of the loading container (5).

4. A storage wagon according to claim 1, **characterized in that** deflector plate (17) is composed of an upper plate section (23) - with regard to a vertical - and a lower plate section (24) which is vertically adjustable relative to the former by means of a drive (21).

## Revendications

1. Wagon de stockage (1) pour marchandise en vrac (2), avec un conteneur de chargement (5) pouvant être déplacé sur des mécanismes de roulement ferroviaires (6), présentant une courroie transporteuse au sol (4) s'étendant dans la direction longitudinale de wagon et avec une courroie transporteuse de transfert (11) adjacente à une extrémité de transfert (9) de la courroie transporteuse au sol (4), saillant au-delà d'une extrémité de wagon avant, pour la transmission de la marchandise en vrac stockée (2) dans une direction de transport (12), et avec une courroie transporteuse supplémentaire (14) disposée à une extrémité supérieure (13) du conteneur de chargement (5), s'étendant dans la direction longitudinale de wagon, **caractérisé par les caractéristiques suivantes :**
a) une plaque de renvoi (17) s'étendant perpendiculairement à la direction longitudinale de wagon (3) est disposée au-dessus de l'extrémité de transfert (9) de la courroie transporteuse au sol (4) et en dessous d'une extrémité de déchargement (15) de la courroie transporteuse supplémentaire (14),
b) la plaque de renvoi (17) est réalisée de manière à pouvoir être pivotée autour d'un axe de pivotement (18) par rapport au conteneur de chargement (5) pour un changement d'un angle de renvoi a inclus avec un plan de transport (19) de la courroie transporteuse au sol (4),
c) la courroie transporteuse au sol (4) est réalisée pour une inversion de la direction de transport 12.

2. Wagon de stockage selon la revendication 1, **caractérisé en ce que** l'axe de pivotement (18) est disposé parallèlement à un axe de renvoi (20) de la courroie transporteuse au sol (4).

3. Wagon de stockage selon la revendication 2, **caractérisé en ce que** l'axe de pivotement (18) est disposé dans la région de l'extrémité supérieure (13) du conteneur de chargement (5).

4. Wagon de stockage selon la revendication 1, **caractérisé en ce que** la plaque de renvoi (17) est composée d'une section de plaque supérieure par rapport à une verticale et d'une section de plaque inférieure (23, 24) réglable en hauteur par rapport à celle-ci par un entraînement (21).
